# EUROPEAN PATENT APPLICATION

(11) **EP 3 668 114 A1**
(43) Date of publication of application: **17.06.2020**
(21) Application number: 18844137.2
(22) Date of filing: 01.08.2018
(51) Int. Cl.: H04R 9/02, H04R 1/02, H04R 1/10, H04R 9/04, H04R 25/00

(54) **LOUDSPEAKER AND ACOUSTIC DEVICE**

(30) Priority: 08.08.2017 JP 2017153379; 08.08.2017 JP 2017153601; 08.08.2017 JP 2017153608
(71) Applicant: Panasonic Intellectual Property Management Co., Ltd., Osaka-shi, Osaka 540-6207 (JP)
(72) Inventor: MATSUO, Yuji, Osaka-shi, Osaka 540-6507 (JP); KOSUDA, Kazuyuki, Osaka-shi, Osaka 540-6207 (JP); KOBAYASHI, Yuichi, Osaka-chi, Osaka 540-6207 (JP); MAKINO, Yasuhiro, Osaka-chi, Osaka 540-6207 (JP)
(74) Representative: Vigand, Philippe
(86) International application number: PCT/JP2018/028864
(87) International publication number: WO 2019/031353

(57) **Abstract**

Included are a yoke (53), a magnet (52) fixed to the yoke (53), a plate (51) fixed to an end surface (52c) of the magnet (52) opposite to an end surface (52d) to which the yoke (53) is fixed, a voice coil (40) disposed inside a magnetic gap (54) formed by facing portions disposed in the yoke (53) and the plate (51), respectively, to face each other, a vibration plate (10) fixed to the voice coil (40), a holding member (30) which holds the yoke (53) and the vibration plate (10), and a magnetic fluid (60) disposed between the facing portion of the plate (51) and the voice coil (40). A coating containing a fluorine resin is formed on a surface of a portion contacting the magnetic fluid (60) in at least one of the plate (51) and the voice coil (40).

## Description

### [Technical Field]

This disclosure relates to a loudspeaker including a magnetic fluid, and an acoustic device including the loudspeaker.

### [Background Art]

PTL 1 discloses a conventional loudspeaker including a magnetic fluid. The magnetic fluid is disposed between a voice coil disposed inside a magnetic gap included in a magnetic circuit and a plate which forms the magnetic circuit. As above, the vibration of the voice coil is stabilized in such a conventional loudspeaker by disposing a magnetic fluid between the voice coil and the plate.

### [Citation List]

### [Patent Literature]

[PTL 1] Japanese Unexamined Patent Application Publication No. 2013-157735
[PTL 2] Japanese Patent No. 6021023

### [Summary of Invention]

### [Technical Problem]

The conventional loudspeaker above cannot effectively improve distortion properties.

An object of this disclosure is to provide a loudspeaker which can effectively improve distortion properties.

### [Solution to Problem]

The loudspeaker according to one aspect of this disclosure includes a yoke; a magnet fixed to the yoke; a plate fixed to a surface of the magnet opposite to a surface of the magnet to which the yoke is fixed; a voice coil disposed inside a magnetic gap formed by facing portions which are disposed in the yoke and the plate, respectively, to face each other; a vibration plate fixed to the voice coil; a holding member which holds the yoke and the vibration plate; and a magnetic fluid disposed between the facing portion of the plate and the voice coil, wherein a coating containing a fluorine resin is formed on a surface of a portion in contact with the magnetic fluid in at least one of the plate and the voice coil.

The earphone according to one aspect of this disclosure includes the loudspeaker above.

### [Advantageous Effects of Invention]

The loudspeaker according to this disclosure can effectively improve distortion properties.

### [Brief Description of Drawings]

[FIG. 1]

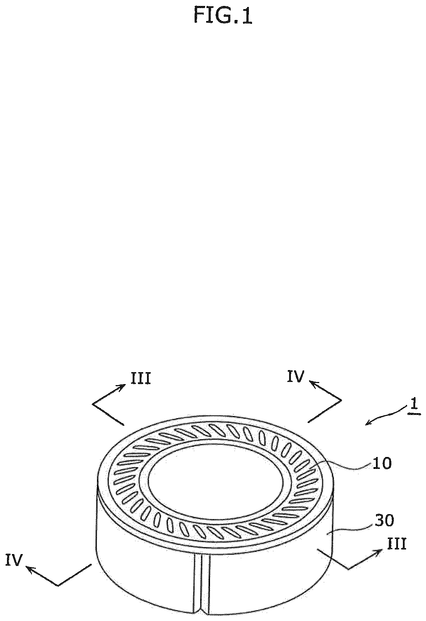

   FIG. 1 is a perspective view illustrating an appearance of the loudspeaker according to an embodiment.
[FIG. 2]

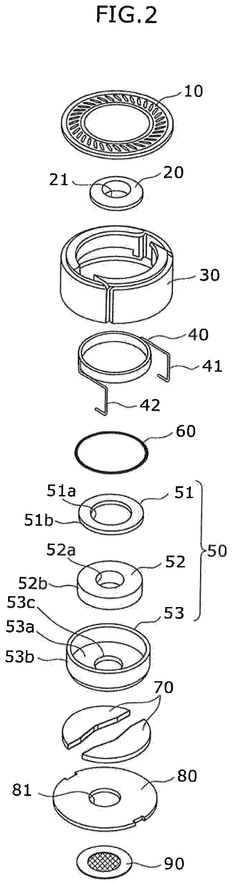

   FIG. 2 is an exploded perspective view of the loudspeaker.
[FIG. 3]

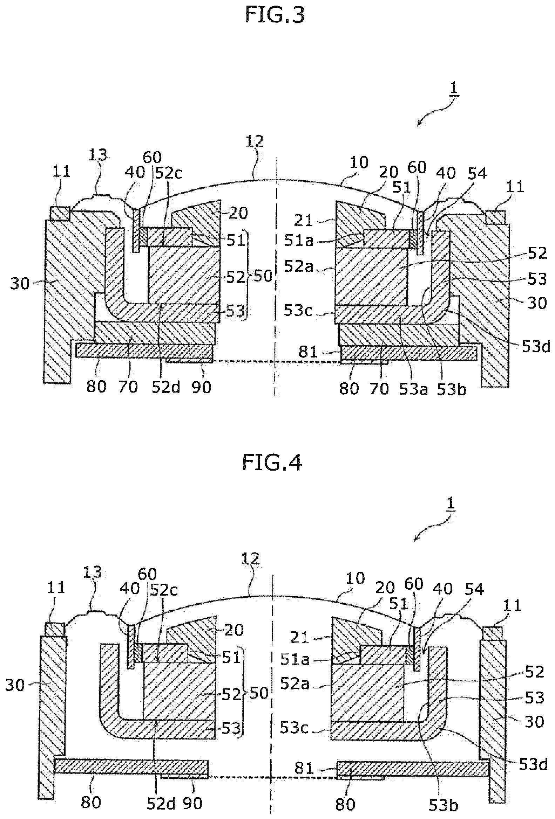

   FIG. 3 is a sectional view of the loudspeaker in FIG. 1 taken along line III-III.
[FIG. 4]
   FIG. 4 is a sectional view of the loudspeaker in FIG. 1 taken along line IV-IV.
[FIG. 5]

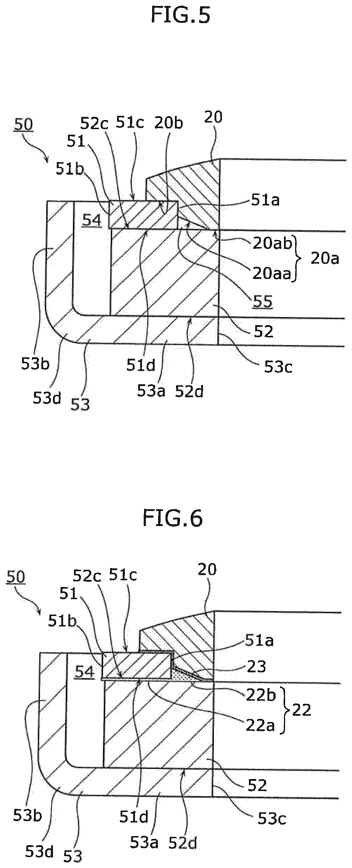

   FIG. 5 is an enlarged diagram illustrating the loudspeaker in FIG. 3, where an adhesive portion is not formed yet in the bonding portion of the stopper, the plate, and the magnet.
[FIG. 6]
   FIG. 6 is an enlarged diagram illustrating the loudspeaker in FIG. 3, where an adhesive portion is formed in the bonding portion of the stopper, the plate, and the magnet.
[FIG. 7]

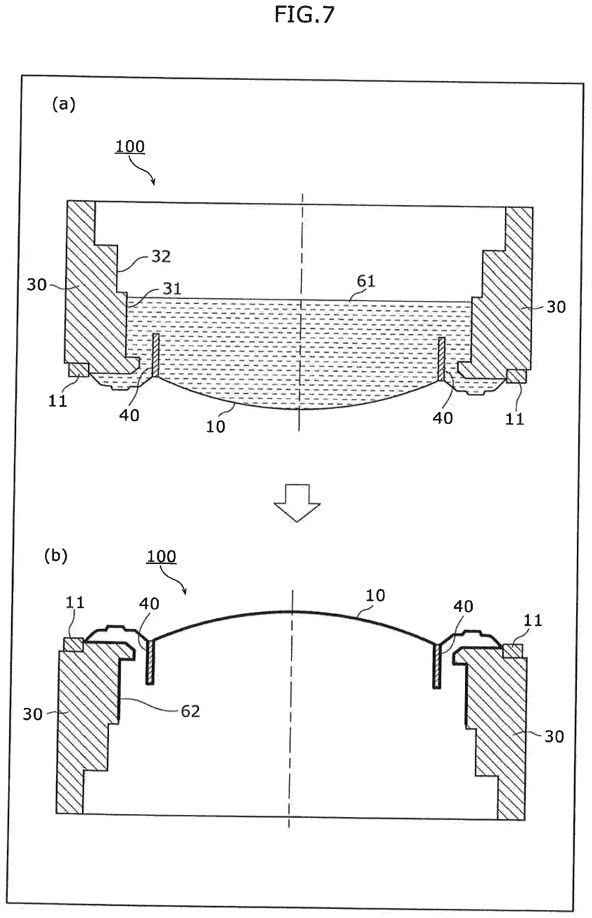

   FIG. 7 is a diagram illustrating a fluorine coating process performed on an assembly in the state where the vibration plate and the holding member are fixed to each other.
[FIG. 8]

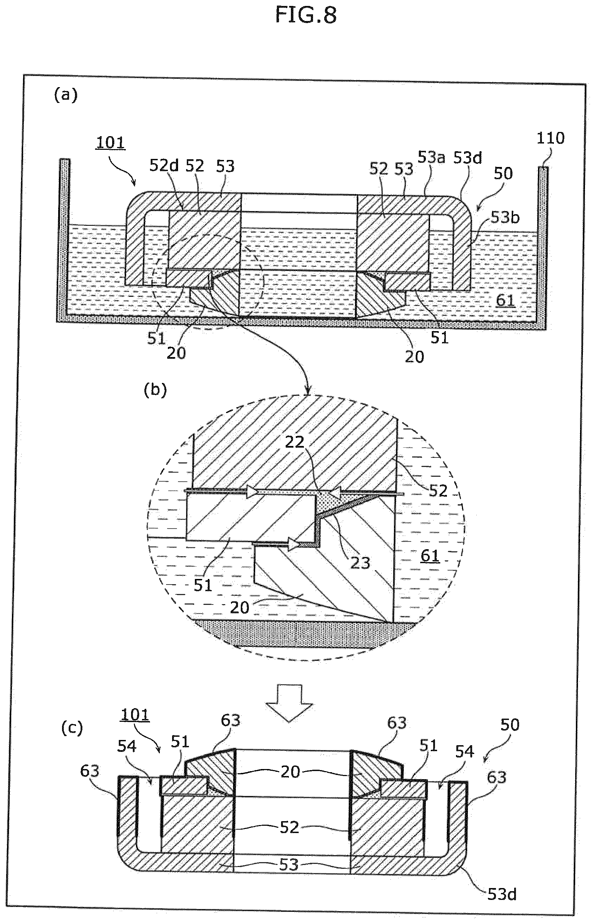

   FIG. 8 is a diagram illustrating a fluorine coating process performed on an assembly in the state where the magnetic circuit and the stopper are fixed to each other.
[FIG. 9]

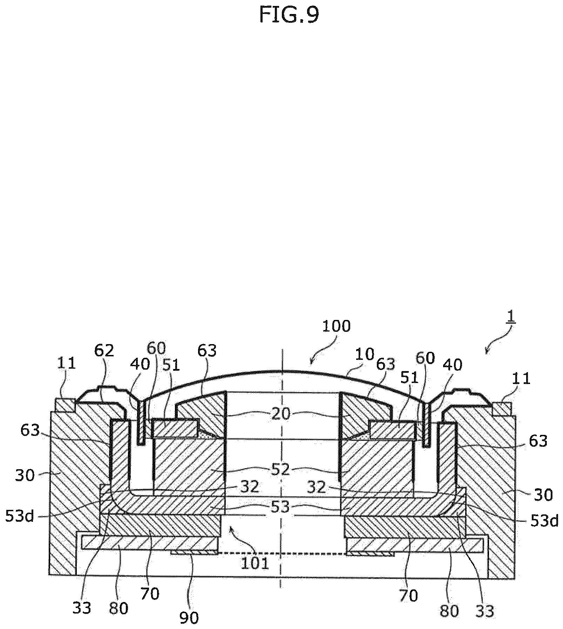

   FIG. 9 is a diagram illustrating a method of adhesion bonding the fluorine coated assembly.
[FIG. 10]

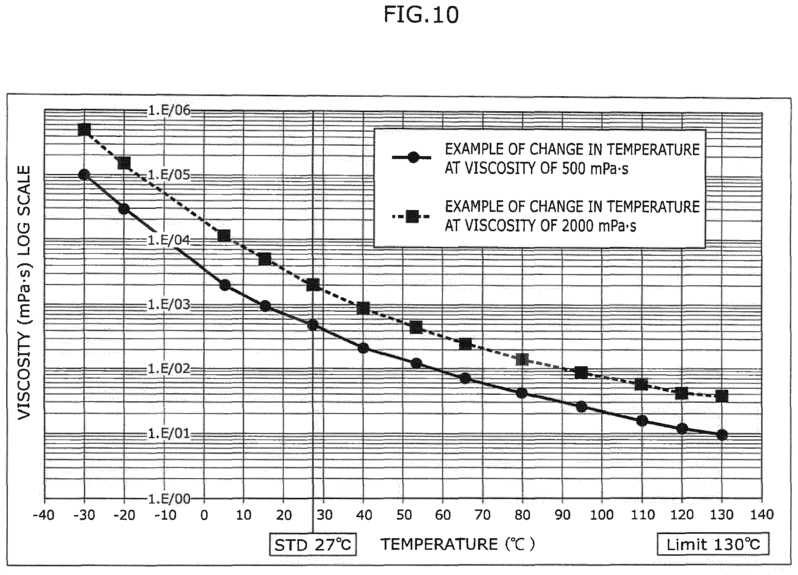

   FIG. 10 is a graph showing the relation between a change in temperature of magnetic fluids having different viscosities at the reference temperature and a change in viscosity thereof.
[FIG. 11]

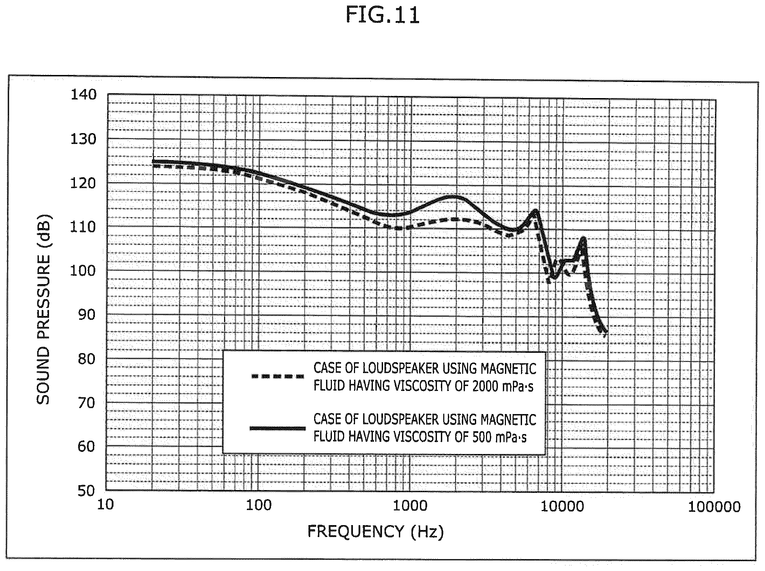

   FIG. 11 is a graph showing the frequency properties of the output sound pressure of the loudspeakers including magnetic fluids having different viscosities at the reference temperature.
[FIG. 12]

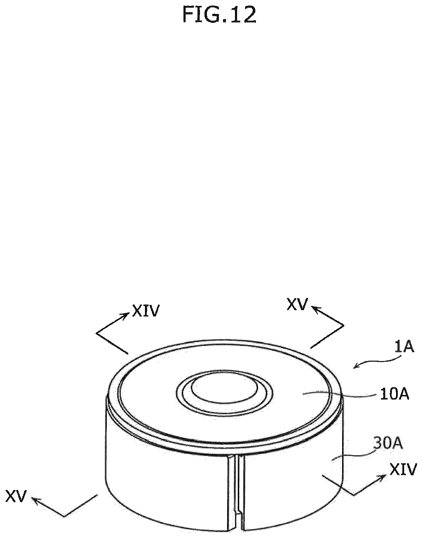

   FIG. 12 is a perspective view illustrating an appearance of the loudspeaker according to Embodiment 2.
[FIG. 13]

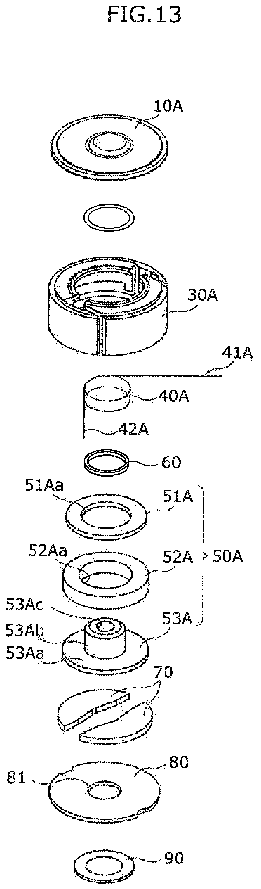

   FIG. 13 is an exploded perspective view of the loudspeaker according to Embodiment 2.
[FIG. 14]

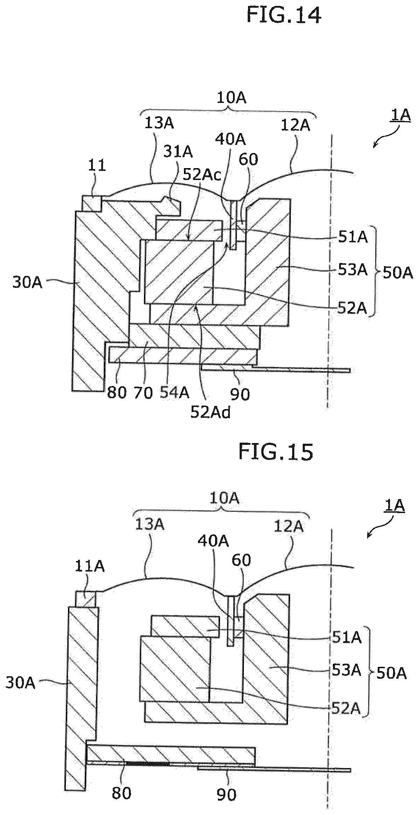

   FIG. 14 is a sectional view of the loudspeaker in FIG. 12 taken along line XIV-XIV.
[FIG. 15]
   FIG. 15 is a sectional view of the loudspeaker in FIG. 12 taken along line XV-XV.
[FIG. 16]

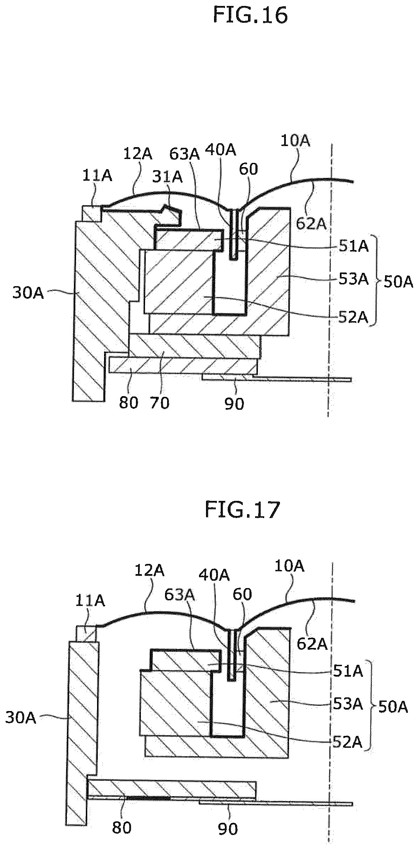

   FIG. 16 is a sectional view of the loudspeaker in FIG. 12 taken along line XIV-XIV after the fluorine coating process.
[FIG. 17]
   FIG. 17 is a sectional view of the loudspeaker in FIG. 12 taken along line XV-XV after the fluorine coating process.
[FIG. 18]

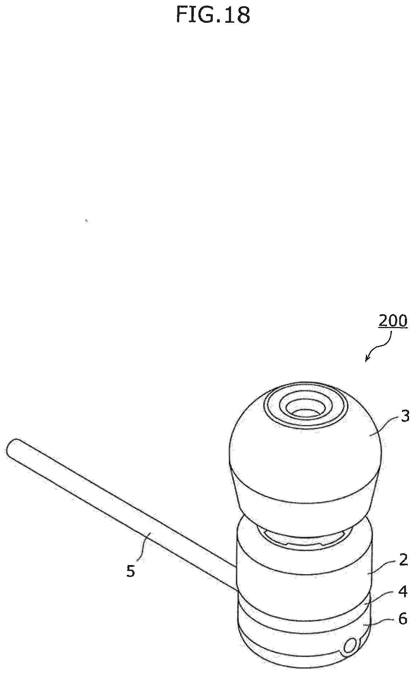

   FIG. 18 is a diagram illustrating an appearance of an earphone including the loudspeaker according to an embodiment.
[FIG. 19]

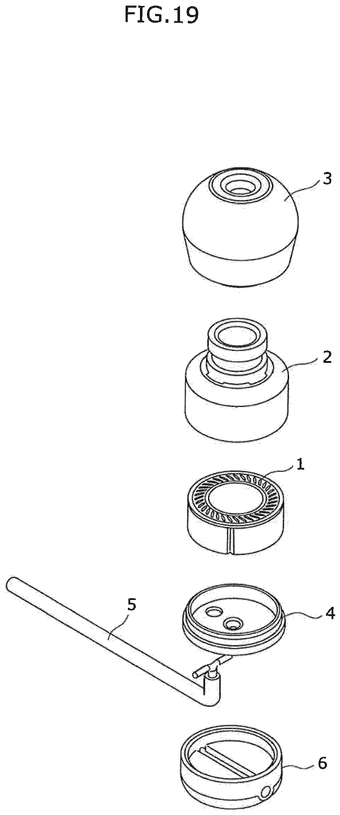

   FIG. 19 is an exploded perspective view of the earphone.

### [Description of Embodiments]

### (Knowledge underlying this disclosure)

The present inventor has found that the loudspeaker described in "Background Art" has the following problems.

In the conventional loudspeaker disclosed in PTL 1 including the surfaces of the voice coil and the plate with which the magnetic fluid is in contact, the surfaces are not subjected to any surface treatment to reduce the surface energy between the magnetic fluid and these surfaces in order to prevent scattering of the magnetic fluid by wind pressure caused by the vibration plate. For this reason, the loudspeaker is susceptible to improvement in distortion properties by sufficiently reducing the surface energy between the surfaces of the voice coil and the plate and the magnetic fluid.

Moreover, the magnetic circuit in the loudspeaker according to PTL 1 is configured by laminating and fixing the yoke, the magnet, and the plate to each other with an adhesive or the like. The magnet is configured to have surfaces cut in the thickness direction, and thus the cross-sections thereof have slight warpage. The plate is formed by press molding, and thus have slight warpage caused by press. Thus, the bonding surfaces of the components configuring the magnetic circuit have slight warpage, which undesirably results in a laminate of these components containing air therebetween when the laminate is formed using an adhesive. Accordingly, the yoke, the magnet, and the plate are adhesion fixed in the state where slight gaps are generated between these components.

Thus, the magnetic circuit has gaps, and the magnetic fluid is disposed between the plate, which configures the magnetic circuit, and the voice coil. For this reason, the magnetic fluid is readily drawn into the gaps in the magnetic circuit by capillary action.

Furthermore, the voice coil generates Joule heat when voltage is applied to the voice coil in which the magnetic fluid is disposed. For this reason, the magnetic fluid is readily affected by the Joule heat from the voice coil, and the temperature thereof readily changes. As a result, the viscosity significantly changes. A significant change in the viscosity of the magnetic fluid also leads to another problem that the capillary action readily occurs.

Thus, the loudspeaker according to one aspect of this disclosure includes a yoke; a magnet fixed to the yoke; a plate fixed to a surface of the magnet opposite to a surface of the magnet to which the yoke is fixed; a voice coil disposed inside a magnetic gap formed by facing portions which are disposed in the yoke and the plate, respectively, to face each other; a vibration plate fixed to the voice coil; a holding member which holds the yoke and the vibration plate; and a magnetic fluid disposed between the facing portion of the plate and the voice coil. A coating containing a fluorine resin is formed on a surface of a portion in contact with the magnetic fluid in at least one of the plate and the voice coil.

Such a configuration can reduce the surface energy between at least one of the plate and the voice coil and the magnetic fluid to more smoothly vibrate the vibration plate. For this reason, the distortion properties of the loudspeaker can be improved.

The coating may be formed on a surface of a recessed portion formed by the yoke, the magnet, and the plate.

Such a configuration can reduce the surface energy of the surfaces of the yoke, the magnet, and the plate to reduce the draw of the magnetic fluid into the gaps between the yoke, the magnet, and the plate by capillary action.

The coating may be formed on at least a bonding portion between the voice coil and the vibration plate and a surface of the voice coil in surfaces on a side of the vibration plate where the voice coil is disposed.

For this reason, even if the voice coil or the vibration plate approaches the surface of the magnetic circuit to generate capillary action on the magnetic fluid, movement of the magnetic fluid from the space between the plate and the voice coil to a distant position can be reduced. For this reason, the scattering of the magnetic fluid can be effectively prevented.

The surface of the yoke held by the holding member may have a region where the coating is not formed.

For this reason, the yoke and the holding member can be effectively adhesion bonded.

The coating may further contain a fluorescent member which emits light when receiving ultraviolet light.

For this reason, the state of formation of the coating can be verified by projecting ultraviolet light onto the surface after the coating is formed. Accordingly, a favorable coating can be formed.

The loudspeaker may further include a first adhesive portion which adhesion bonds the plate and the magnet. The first adhesive portion may include a first portion formed of a first adhesive cured inside a gap between bonding surfaces of the plate and the magnet, and a second portion formed of the first adhesive cured outside the gap, and the second portion is disposed to cover an outlet of the gap in a direction different from a direction toward the magnetic fluid.

In such a configuration, the second portion of the first adhesive portion covers the outlet of the gap between the bonding surfaces of the plate and the magnet. For this reason, the second portion prevents the leakage of the magnetic fluid from the outlet of the gap even if the magnetic fluid invades into the gap. Accordingly, a loss of the magnetic fluid is prevented.

The yoke may be located in an angular portion formed by a surface of the plate and a surface of the magnet, and the angular portion may be adjacent to the outlet of the gap.

In such a configuration, the second portion of the first adhesive portion closes the outlet of the gap adjacent to the angular portion formed by the plate and the magnet. The second portion located in the angular portion can effectively close and seal the outlet of the gap.

The loudspeaker may further include a bonding member bonded to the plate and the magnet; and a second adhesive portion which adhesion bonds the plate and the magnet to the bonding member. The bonding member may be disposed to cover the outlet of the gap and the second portion.

In such a configuration, because the bonding member covers the outlet of the gap and the second portion of the first adhesive portion and is adhesion bonded to the plate and the magnet, the bonding member can prevent the leakage of the magnetic fluid through the outlet of the gap and the second portion.

The second adhesive portion may cover an entirety of the entire yoke.

In such a configuration, the second adhesive portion can prevent the leakage of the magnetic fluid through the second portion of the first adhesive portion.

The bonding member together with the plate and the magnet may form a space which accommodates the yoke.

In such a configuration, the second portion of the first adhesive portion can be formed as a lump according to the shape of the space. Accordingly, the second portion can cover and seal an entirety of the entire outlet of the gap with a sufficient thickness.

The plate may have a corner portion at a distal end from the outlet of the gap in a surface adjacent to the outlet of the gap, the bonding member may have a shape fitted into the corner portion of the plate, and the second adhesive portion may extend beyond the corner portion of the plate.

In such a configuration, the second adhesive portion extends beyond the corner portion of the plate. Such a configuration obstructs further invasion of the magnetic fluid in the corner portion even if the magnetic fluid invades into the gap between the plate and the bonding member. Accordingly, such further invasion of the magnetic fluid can be prevented.

A second adhesive forming the second adhesive portion may be a visible light-curable adhesive, and the bonding member may have translucency.

In such a configuration, fast curing of the second adhesive can be ensured.

The second adhesive forming the second adhesive portion may contain a fluorescent agent which emits light when receiving ultraviolet light.

In such a configuration, the state of adhesion of the second adhesive can be verified by projecting ultraviolet light onto the second adhesive after the bonding of the members. Accordingly, a favorable second adhesive portion can be formed.

The conventional loudspeaker disclosed in PTL 1 includes a magnetic fluid having a large viscosity, e.g., a viscosity of 4000 mPa·s, at a reference temperature (such as 27°C) to prevent the scattering of the magnetic fluid caused by wind pressure from the vibration plate. Usually, a change in viscosity due to a change in temperature more significantly increases as the solvent (oil) used in the magnetic fluid has larger viscosity. In other words, the magnetic fluid used in the conventional loudspeaker has properties such that the viscosity significantly changes when the temperature changes.

The output sound pressure of the loudspeaker changes according to the viscosity of the magnetic fluid. In other words, the viscosity of the magnetic fluid significantly changes as the temperature changes, leading to a problem of a change in output sound pressure of the loudspeaker.

Moreover, the voice coil, in which the magnetic fluid is disposed, generates Joule heat when voltage is applied. For this reason, the magnetic fluid is readily affected by influences by Joule heat from the voice coil, and thus the temperature readily changes, resulting in a significant change in viscosity.

Thus, the conventional loudspeaker including the magnetic fluid has difficulties in stably maintaining the output sound pressure.

Under the circumstances above in which the magnetic fluid is readily drawn into the gaps of the magnetic circuit by capillary action, a magnetic fluid having a large viscosity is more susceptible to the influences by the capillary action because the viscosity significantly reduces according to an increase in temperature. As the viscosity more significantly reduces, the magnetic fluid is more affected by the influences by the capillary action. For this reason, considering the influences by the capillary action, the magnetic fluid preferably has a low viscosity. In other words, the present inventor has conceived that a magnetic fluid having a low viscosity is used in order to prevent the scattering of the magnetic fluid.

In other words, the loudspeaker according to one aspect of this disclosure includes a yoke; a magnet fixed to the yoke; a plate fixed to a surface of the magnet opposite to a surface of the magnet to which the yoke is fixed; a voice coil disposed inside a magnetic gap formed by facing portions which are disposed in the yoke and the plate, respectively, to face each other; a vibration plate fixed to the voice coil; a holding member which holds the yoke and the vibration plate; and a magnetic fluid disposed between the facing portion of the plate and the voice coil. The magnetic fluid has a viscosity of more than 9 mPa·s and 500 mPa·s or less at a predetermined reference temperature, the viscosity of the magnetic fluid has a local minimum value of 9 mPa·s or more in a temperature range beyond the predetermined reference temperature, and the viscosity of the magnetic fluid at the predetermined reference temperature is larger than the viscosity of the magnetic fluid in the temperature range.

In such a configuration, a reduction of viscosity can be suppressed even if the temperature rises, because the magnetic fluid to be used has a viscosity of more than 9 mPa·s and 500 mPa·s or less in the predetermined reference temperature. For this reason, a loudspeaker which can stably maintain the output sound pressure can be implemented.

The magnetic fluid may have a magnetic saturated density of 22 mT or more.

For this reason, even if the magnetic fluid having a low viscosity is used, the attractive force can be maximized by the magnetic force, effectively causing the magnetic fluid to stay inside the magnetic gap of the magnetic circuit. Accordingly, the influences on the magnetic fluid by the capillary action can be reduced.

A technique using a magnetic fluid disposed in a magnetic circuit is proposed in order to improve the sound quality of the loudspeaker. For example, the loudspeaker disclosed in PTL 1 includes a magnet, a yoke and a plate connected to the magnet, and a voice coil disposed inside the magnetic gap between the yoke and the plate. The voice coil is bonded to a vibration plate. Furthermore, the loudspeaker includes a magnetic fluid between the plate and the voice coil. The magnetic fluid holds the voice coil to the plate.

The loudspeaker disclosed in PTL 1 has a possibility that the magnetic fluid invades into gaps between the members such as the plate and the magnet by the capillary action and leaks from the gaps to the outside. As a result, the amount of magnetic fluid to hold the voice coil may be decreased, and thus the function of the magnetic fluid to hold the voice coil may be reduced, causing abnormalities in the loudspeaker.

In the loudspeaker disclosed in PTL 1, the magnetic fluid is disposed at the edge of the plate. Furthermore, the edge of the plate is located at a position near the bonding surfaces of the plate and the magnet. The vibration of the voice coil during generation of sound waves results in the vibration of the magnetic fluid, which brings the magnetic fluid into contact with the bonding surfaces thereof. At this time, capillary action is generated in the magnetic fluid by the surface tension of the magnetic fluid, and then the magnetic fluid may invade into the gaps between the bonding surfaces. The invading magnetic fluid leaks from the outlet of the gap located opposite to the magnetic fluid, for example. As a result, the magnetic fluid inside the magnetic gap decreases, and thus the function of the magnetic fluid is reduced. The present inventors then have devised a technique described below in order to prevent a loss in magnetic fluid.

The loudspeaker according to one aspect of this disclosure includes a magnet; a first member which has a first facing portion and is magnetically bonded to a first magnetic pole of the magnet; a second member which has a second facing portion disposed on an outer side of the first facing portion to face the first facing portion, and is magnetically bonded to a second magnetic pole opposite to the first magnetic pole of the magnet; a voice coil disposed in a magnetic gap formed between the first facing portion and the second facing portion; a magnetic fluid disposed at least between the voice coil and the first facing portion; and a first adhesive portion which adhesion bonds the first member and the magnet. The first adhesive portion includes a first portion formed of a first adhesive cured inside a gap between bonding surfaces of the first member and the magnet, and a second portion formed of the first adhesive cured outside the gap, and the second portion is disposed to cover an outlet of the gap in a direction different from a direction toward the magnetic fluid.

According to the aspect above, the second portion of the first adhesive portion covers the outlet of the gap between the bonding surfaces of the first member and the magnet. For this reason, the second portion prevents the leakage of the magnetic fluid from the outlet of the gap even if the magnetic fluid invades into the gap. Accordingly, a loss of the magnetic fluid is prevented.

In the loudspeaker according to one aspect of this disclosure, the second portion may be located in an angular portion formed by a surface of the first member and a surface of the magnet, and the angular portion may be adjacent to the outlet of the gap. According to the aspect above, the second portion of the first adhesive portion closes the outlet of the gap adjacent to the angular portion formed by the first member and the magnet. The second portion located in the angular portion can effectively close and seal the outlet of the gap.

The loudspeaker according to one aspect of this disclosure may further include a third member bonded to the first member and the magnet; and a second adhesive portion which adhesion bonds the first member and the magnet to the third member. The third member may be disposed to cover the outlet of the gap and the second portion. According to the aspect above, because the third member covers the outlet of the gap and the second portion of the first adhesive portion and is adhesion bonded to the first member and the magnet, the leakage of the magnetic fluid through the outlet of the gap and the second portion can be prevented.

In the loudspeaker according to one aspect of this disclosure, the second adhesive portion may cover the entire second portion. According to the aspect above, the second adhesive portion can prevent the leakage of the magnetic fluid through the second portion of the first adhesive portion.

In the loudspeaker according to one aspect of this disclosure, the third member together with the first member and the magnet may form a space which accommodates the second portion. According to the aspect above, the second portion of the first adhesive portion can be formed as a lump according to the shape of the space. Accordingly, the second portion can cover and seal the entire outlet of the gap with a sufficient thickness.

In the loudspeaker according to one aspect of this disclosure, the first member may have a corner portion at a distal end from the outlet of the gap in a surface adjacent to the outlet of the gap, the third member may have a shape fitted into the corner portion of the first member, and the second adhesive portion may extend beyond the corner portion of the first member. According to the aspect above, the second adhesive portion extends beyond the corner portion of the first member. Such a configuration obstructs further invasion of the magnetic fluid in the corner portion even if the magnetic fluid invades into the gap between the first member and the third member. Accordingly, such further invasion of the magnetic fluid can be prevented.

In the loudspeaker according to one aspect of this disclosure, a second adhesive forming the second adhesive portion may be a visible light-curable adhesive, and the third member may have translucency. According to the aspect above, fast curing of the second adhesive can be ensured.

In the loudspeaker according to one aspect of this disclosure, the second adhesive forming the second adhesive portion may contain a fluorescent agent. According to the aspect above, the state of adhesion of the second adhesive can be verified by projecting light onto the second adhesive after the bonding of the members, the light causing the fluorescent agent to emit light. Accordingly, a favorable second adhesive portion can be formed.

The earphone according to one aspect of this disclosure includes the loudspeaker above. According to the aspect above, the same effect as that of the loudspeaker according to one aspect of this disclosure can be obtained.

The hearing aid according to one aspect of this disclosure includes the loudspeaker above. According to the aspect above, the same effect as that of the loudspeaker according to one aspect of this disclosure can be obtained.

According to one aspect of this disclosure, a portable terminal apparatus includes the loudspeaker above. According to the aspect above, the same effect as that of the loudspeaker according to one aspect of this disclosure can be obtained.

The acoustic device according to one aspect of this disclosure includes the loudspeaker above, and a housing which accommodates the loudspeaker.

According to the aspect above, the same effect as that of the loudspeaker according to one aspect of this disclosure can be obtained.

The loudspeaker according to one aspect of this disclosure will now be specifically described with reference to the drawings.

The embodiments described below all illustrate specific examples of this disclosure. Numeric values, shapes, materials, components, arrangement positions and connection forms of the components, processings, order of processings and the like described in the following embodiments are exemplary, and should not be construed as limitative to this disclosure. Moreover, among the components of the embodiments below, the components not described in an independent claim representing the most superordinate concept of the present disclosure will be described as arbitrary components. In the description of the embodiments below, expressions with "approximately" such as approximately parallel and approximately orthogonal are used in some cases. For example, the expression "approximately parallel" means not only complete parallelism but also substantial parallelism, for example, including a difference of several percent. The same applies to other expressions with "approximately". The drawings are schematic views, and are not always strictly drawn. Furthermore, in the drawings, identical referential numerals are given to substantially identical components, and the duplication of descriptions thereof will be omitted or simplified in some cases.

### [Embodiment 1]

The loudspeaker according to Embodiment 1 will be described with reference to FIGs. 1 to 11. The loudspeaker according to Embodiment 1 is a loudspeaker including a magnetic circuit of an internal magnet type.

### [1-1. Configuration]

FIG. 1 is a perspective view illustrating an appearance of the loudspeaker according to Embodiment 1. FIG. 2 is an exploded perspective view of the loudspeaker according to Embodiment 1. FIG. 3 is a sectional view of the loudspeaker in FIG. 1 taken along line III-III. FIG. 4 is a sectional view of the loudspeaker in FIG. 1 taken along line IV-IV.

As illustrated in FIGs. 1 to 4, loudspeaker 1 includes vibration plate 10, holding member 30, voice coil 40, plate 51, magnet 52, yoke 53, and magnetic fluid 60. In other words, the magnetic circuit of an internal magnet type is formed of plate 51, magnet 52, yoke 53, and magnetic fluid 60. Loudspeaker 1 may further include stopper 20, spacer 70, substrate 80, and dust protective net 90. In loudspeaker 1, the direction of sounds released from loudspeaker 1 is defined as a front side and the opposite direction is defined as a rear side.

Vibration plate 10 is in the form of a thin circular plate. When seen from the front side, vibration plate 10 has a central portion projected toward the front side from the outer circumferential edge. Vibration plate 10 also includes a central disk-shaped vibration plate body 12, and an annular or ring-shaped vibration plate edge 13 which surrounds the outer circumference of vibration plate body 12. Vibration plate edge 13 has flexibility, and vibration plate body 12 has more rigidity than vibration plate edge 13 has. Vibration plate edge 13 in the diameter direction has a width smaller than that of vibration plate body 12A in the diameter direction. The outer circumferential edge of vibration plate body 12 and the inner circumferential edge of vibration plate edge 13 are bonded to each other to integrally form vibration plate body 12 and vibration plate edge 13. Vibration plate 10 includes outer circumferential ring 11 at the outer circumferential edge of vibration plate edge 13, and is held by holding member 30 by fixing outer circumferential ring 11 to holding member 30. Vibration plate body 12 is bonded to voice coil 40 near the outer circumferential edge of vibration plate body 12. In such a configuration, when voice coil 40 vibrates, vibration plate body 12 and vibration plate edge 13 together vibrate while vibration plate edge 13 deforms.

Vibration plate 10 includes a coating containing a fluorine resin on the surface thereof on the rear side. Details of the fluorine coating process for forming the coating will be described later.

Holding member 30 is a cylindrical member, which holds vibration plate 10 at the end thereof on the front side. Holding member 30 accommodates stopper 20, voice coil 40, plate 51, magnet 52, yoke 53, and magnetic fluid 60 inside holding member 30. Holding member 30 may further accommodate substrate 80 and dust protective net 90. Substrate 80 and dust protective net 90 may be disposed at the end of holding member 30 opposite to vibration plate 10 in the front and rear direction. Holding member 30 is formed of a metal or a resin, for example.

Plate 51 is a metal member having a circular platy shape and having through hole 51a formed in its center. One of the surfaces of plate 51 is fixed to the end surface of magnet 52 on the N pole side in the state where the surface of plate 51 faces the end surface. Plate 51 has a coating containing a fluorine resin formed on the surface of outer circumferential edge 51b. Plate 51 is formed of a magnetic body. Here, plate 51 is one example of a first member. Outer circumferential edge 51b of plate 51 is one example of a first facing portion.

Magnet 52 is a permanent magnet having a circular platy shape and having through hole 52a formed in its center. Magnet 52 has the N pole at one end thereof in the thickness direction (front and rear direction), and has the S pole at the other end. Conversely, magnet 52 may have the S pole at one end and has the N pole at the other end. Plate 51 is fixed to end surface 52c of magnet 52 on the N pole side, and yoke 53 is fixed to end surface 52d thereof on the S pole side. Magnet 52 is disposed coaxially with plate 51. The outer diameter of magnet 52 is identical with that of plate 51. For this reason, outer circumferential surface 52b of magnet 52 is approximately flush with outer circumferential edge 51b of plate 51. The outer diameter of magnet 52 may be smaller than that of plate 51. The inner diameter of through hole 52a of magnet 52 is smaller than that of through hole 51a of plate 51. For this reason, end surface 52c of magnet 52 is partially exposed within through hole 51a without being covered with plate 51. Specifically, plate 51, magnet 52, and yoke 53 are fixed to each other with an adhesive. Plate 51, magnet 52, and yoke 53 do not always need to be fixed with an adhesive, and may be fixed with a fastening member such as a screw or a rivet.

Yoke 53 includes circular plate portion 53a having a circular platy shape and through hole 53c formed in its center, and a cylindrical tube portion 53b erected from the outer circumferential edge of circular plate portion 53a on circular plate portion 53a. Circular plate portion 53a of yoke 53 having tube portion 53b formed thereon is fixed to the end of magnet 52 on the S pole side. Tube portion 53b of yoke 53 covers the side of outer circumferential surface 52b of magnet 52 and is not in contact with outer circumferential surface 52b of magnet 52. Magnet 52 is disposed inside tube portion 53b of yoke 53, and a cylindrical space is formed between tube portion 53b and magnet 52. Circular plate portion 53a of yoke 53 is disposed coaxially with magnet 52. Tube portion 53b of yoke 53 extends toward the side of plate 51 disposed at the end of magnet 52 on the N pole side. In other words, tube portion 53b is one example of the second facing portion facing outer circumferential edge 51b as the first facing portion of plate 51. Magnetic gap 54 is formed between tube portion 53b and plate 51. The outer circumferential surface of tube portion 53b of yoke 53 may be partially held by holding member 30. Yoke 53 is formed of a magnetic body. Yoke 53 is one example of a second member.

As described above, plate 51, magnet 52, and yoke 53 form magnetic circuit 50 of an internal magnet type.

Stopper 20 is a member for preventing vibration plate 10 from excessively approaching plate 51. Stopper 20 is projected from plate 51 toward vibration plate 10, and has a shape along the shape of vibration plate 10. A gap is formed between the projected portion of stopper 20 and vibration plate 10. Stopper 20 also has through hole 21 having an approximately identical shape as those of through holes 52a and 53c in a position corresponding to through holes 52a and 53c of magnetic circuit 50. Stopper 20 is disposed so as to cover part of plate 51 and the exposed portion of end surface 52c of magnet 52. Stopper 20 is fixed to plate 51 and magnet 52 with an adhesive. Stopper 20 is formed of a non-magnetic material, such as a resin. Stopper 20 is configured so as to transmit visible light, and is formed to be semi-transparent or transparent, for example. Examples of a constitutional material for stopper 20 include polycarbonates (also referred to as "PC") and acrylic resins (also referred to as "PMMA"). However, the constitutional material for stopper 20 may be any material which can transmit visible light, and has resistance against magnetic fluid 60 described later. Specifically, the constitutional material for stopper 20 may be a material having resistance against the solvent forming magnetic fluid 60. In the case where the oils and fats shown in Table 1 below are used as the solvent, the constitutional material for stopper 20 may be a material having resistance to the oils and fats shown in Table 1. Stopper 20 is one example of a bonding member. Stopper 20 is also one example of a third member.

A coating may be formed on part of the front surfaces of stopper 20 and magnetic circuit 50. Details of the fluorine coating process for forming the coating will be described later.

### [Table 1]

**Table 1: Relation between base oil and resistance of resin**

| Name of resin | Base oil | | | |
|---|---|---|---|---|
| | Ester oil | Fluorine oil | Mineral oil | Poly-α-olefin oil |
| | | | (hydrocarbon oil) | |
| ABS | C | A | B | A |
| Polycarbonate (PC) | C | A | B | A |
| Polyacetal (POM) | A | A | A | A |
| Polyamide (PA) | A | A | A | A |
| Polybutylene terephthalate (PBT) | B | A | A | A |
| Polyether ether ketone (PEEK) | A | A | A | A |
| Polyphenylene sulfide (PPS) | A | A | A | A |

| | | | | |
|---|---|---|---|---|
| A: has high resistance (hardly affected by influences of the base oil) B: has resistance (affected by influences of the base oil in some cases) C: has no resistance | | | | |

Voice coil 40 is a coiled member produced by winding a metal wire material several times into loops (in a cylindrical shape). Voice coil 40 has input terminals 41 and 42 to which an electric signal is input. Voice coil 40 is fixed to vibration plate 10. Specifically, voice coil 40 is fixed to a site on an inner side with respect to the outer circumferential edge of vibration plate 10. Voice coil 40 is disposed inside magnetic gap 54 of magnetic circuit 50. A coating containing a fluorine resin is formed on the surface of voice coil 40 on the inner circumference side.

Magnetic fluid 60 is disposed between the facing portion of plate 51 of magnetic circuit 50 and voice coil 40. Magnetic fluid 60 is disposed across the surface of plate 51 on the outer circumference side to the surface of voice coil 40 on the inner circumference side. In other words, magnetic fluid 60 is disposed in the state where plate 51 and voice coil 40 are bridged. Magnetic fluid 60 is also disposed in an annular shape across the entire outer circumference of plate 51. In other words, magnetic fluid 60 is disposed in an annular shape across the entire inner circumference of voice coil 40. Magnetic fluid 60 is a magnetic colloid solution prepared by mixing ferromagnetic nanoparticles of iron oxide (Fe₃O₄) or the like and a dispersant covering the surfaces of the ferromagnetic nanoparticles, such as an organic acid, with a solvent comprising a synthetic hydrocarbon oil, such as poly-α-olefin.

Spacer 70 is a member for forming a sound duct by forming a space with holding member 30, yoke 53, and substrate 80. Spacer 70 is disposed on circular plate portion 53a of yoke 53 opposite to the side where magnet 52 is disposed.

Substrate 80 is a member having a circular platy shape and having through hole 81 formed in its center. Substrate 80 includes a circuit which electrically connects input terminals 41 and 42 of voice coil 40 and a terminal for obtaining an external electric signal. The circuit may convert an electric signal externally obtained, and may output the converted electric signal to input terminals 41 and 42 of voice coil 40. Substrate 80 is disposed on spacer 70 opposite to the side where yoke 53 is disposed.

Dust protective net 90 is a net which covers through hole 81 of substrate 80. Dust protective net 90 is disposed on substrate 80 opposite to the side where spacer 70 is disposed.

### [1-2. Detailed configuration of bonding portion]

Details of the bonding portion of stopper 20, plate 51, and magnet 52 will now be described. With reference to FIG. 5, the enlarged bonding portion of stopper 20, plate 51, and magnet 52 in loudspeaker 1 of FIG. 3 is illustrated, where the adhesive portion is not formed yet. With reference to FIG. 6, the enlarged bonding portion of stopper 20, plate 51, and magnet 52 in loudspeaker 1 of FIG. 3 is illustrated, where the adhesive portion is formed.

As illustrated in FIG. 5, plate 51 in the form of a ring plate has two flat annular surfaces 51c and 51d between through hole 51a and outer circumferential edge 51b, surfaces 51c and 51d facing the opposite directions. Plate 51 is disposed such that surface 51d faces end surface 52c of magnet 52. Stopper 20 is disposed across surface 51c, the inner circumferential surface of through hole 51a, and end surface 52c so as to cover plate 51 and magnet 52. Stopper 20 has surface 20b having a shape along the shapes of surface 51c and the inner circumferential surface of through hole 51a. Surface 20b is tightly fitted into a corner portion formed by surface 51c and the inner circumferential surface of through hole 51a. Surface 20b has an annular shape, and its cross-section in the diameter direction is recessed in an L-shape. Here, the corner portion formed by surface 51c and the inner circumferential surface of through hole 51a is a corner portion at the distal end from the outlet of the gap between plate 51 and magnet 52 in the inner circumferential surface of through hole 51a adjacent to the outlet of the gap.

Annular surface 20a of stopper 20 facing end surface 52c partially has annular surface 20ab having a shape along the shape of end surface 52c in an inner portion of surface 20a in the diameter direction, and inclined annular surface 20aa inclined so as to be farther away from end surface 52c in an outer portion in the diameter direction. Inclined annular surface 20aa is inclined to end surface 52c such that inclined annular surface 20aa is disposed farther away from end surface 52c toward the outer side in the diameter direction. Thereby, sealing space 55 as an annular gap is formed among inclined annular surface 20aa, through hole 51a, and end surface 52c. In this example, sealing space 55 has a cross-section in the diameter direction having a shape of a right-angled triangle. The cross-section of sealing space 55 in the diameter direction can have any shape which covers the outlet of the gap between surface 51d and end surface 52c. For example, inclined annular surface 20aa, which is a flat inclined surface in this example, may have a bent surface projected toward the outlet or a curved surface recessed therefrom.

Stopper 20, plate 51, and magnet 52 are bonded to each other with an adhesive. Specifically, as illustrated in FIG. 6, plate 51 is bonded to magnet 52 with first adhesive portion 22 as a result of curing of a first adhesive. Stopper 20 is bonded to plate 51 and magnet 52 with second adhesive portion 23 as a result of curing of a second adhesive.

First adhesive portion 22 integrally includes first portion 22a and second portion 22b. First portion 22a and second portion 22b are not separated from each other, rather form a continuous single adhesive portion together. First portion 22a is located in a gap between surface 51d of plate 51 and end surface 52c of magnet 52, and is formed by curing the first adhesive filled in the gap. First portion 22a bonds plate 51 to magnet 52, and seals the gap between surface 51d and end surface 52c. Here, surface 51d and end surface 52c are the bonding surfaces of plate 51 and magnet 52, respectively, and are examples of the bonding surfaces of the first member and the magnet.

Furthermore, second portion 22b is located outside the gap between surface 51d and end surface 52c. Second portion 22b is formed by curing the first adhesive filled in sealing space 55. Second portion 22b seals the angular portion formed by the inner circumferential surface of through hole 51a of plate 51 and end surface 52c of magnet 52. The angular portion has an annular shape, and its cross-section in the diameter direction is recessed in an L-shape. Such a second portion 22b covers and seals the outlet of the gap between surface 51d and end surface 52c. Here, the outlet of the gap between surface 51d and end surface 52c in the angular portion is one example of the outlet of the gap in a direction different from the direction toward magnetic fluid 60.

Second adhesive portion 23 is formed by curing the second adhesive filled in the gap between surface 20b of stopper 20 and surface 51c of plate 51 and the gap between surface 20b and the inner circumferential surface of through hole 51a of plate 51. Second adhesive portion 23 bonds stopper 20 to magnet 52 to seal the gap between surface 20b and surface 51c and the gap between surface 20b and the inner circumferential surface of through hole 51a. Furthermore, second adhesive portion 23 is also formed by curing the second adhesive filled in the gap between surface 20a of stopper 20 and end surface 52c of magnet 52. Second adhesive portion 23 bonds stopper 20 to magnet 52 to seal the gap between surface 20a and end surface 52c. In sealing space 55, second adhesive portion 23 is formed across the entire circumference of sealing space 55 to overlay second portion 22b of first adhesive portion 22. In other words, second adhesive portion 23 covers the entire second portion 22b in the angular portion formed by the inner circumferential surface of through hole 51a and end surface 52c. Second adhesive portion 23 seals the gap between second portion 22b and the inner circumferential surface of through hole 51a and the gap between second portion 22b and end surface 52c of magnet 52.

The first adhesive forming first adhesive portion 22 and the second adhesive forming second adhesive portion 23 preferably have resistance against magnetic fluid 60. The first adhesive and the second adhesive may have resistance against the base solution contained in magnetic fluid 60. The second adhesive is preferably a visible light-curable adhesive which receives visible light to promote curing. Furthermore, the second adhesive preferably has a fluorescent agent as a constitutional component. When receiving light at a specific wavelength, the fluorescent agent emits light. The fluorescent agent may be configured to emit light when receiving ultraviolet light having a wavelength of 315 to 400 nm (nanometers), for example. In this case, second adhesive portion 23 formed of the second adhesive emits light when receiving ultraviolet light by use of a blacklight or the like. The first adhesive and the second adhesive may be different adhesives, or may be the same adhesive.

Here, one example of a method of assembling plate 51 and stopper 20 to magnet 52 will be described with reference to FIGs. 5 and 6. First, the first adhesive before curing is applied to surface 51d of plate 51 (coating process of the first adhesive). At this time, the first adhesive is applied across the entire surface of the annular surface 51d. Furthermore, plate 51 is placed in a predetermined position on end surface 52c while surface 51d faces end surface 52c of magnet 52, and is pressed against end surface 52c. In other words, plate 51 is boned to magnet 52 (bonding process of plate 51). In the example in FIGs. 5 and 6, the predetermined position refers to a position flush with outer circumferential edge 51b of plate 51 and the outer circumferential surface of magnet 52. By pressing plate 51, the first adhesive overflows from the gap between surface 51d and end surface 52c into through hole 51a of plate 51, and then is accumulated in the angular portion formed by end surface 52c and the inner circumferential surface of through hole 51a. The first adhesive in the gap between surface 51d and end surface 52c is cured into first portion 22a of first adhesive portion 22, and the first adhesive accumulated in the angular portion is cured into second portion 22b of first adhesive portion 22. Such a first portion 22a and second portion 22b continuously extend together to form a continuous single first adhesive portion 22.

In the next step, the second adhesive before curing is applied to surfaces 20a and 20b of stopper 20 (coating process of the second adhesive). At this time, the second adhesive is applied to the entire annular surfaces 20a and 20b. Furthermore, stopper 20 is placed on surface 51c and end surface 52c while surfaces 20a and 20b face surface 51c of plate 51 and end surface 52c of magnet 52, and is pressed against surface 51c and end surface 52c. In other words, stopper 20 is bonded to plate 51 and magnet 52 (bonding process of stopper 20). At this time, surface 20b of stopper 20 is fitted into the corner portion formed by surface 51c and through hole 51a of plate 51. The bonding of stopper 20 is preferably performed before the first adhesive is cured, namely, the first adhesive accumulated on end surface 52c is deformable.

As a result, the first adhesive accumulated on end surface 52c deforms along the shape of sealing space 55, and is fitted inside sealing space 55. Furthermore, the second adhesive covers the entire first adhesive inside sealing space 55 and in the vicinity thereof. The entire sealing space 55 is completely filled with the first adhesive and the second adhesive. Thereby, second portion 22b formed by curing the first adhesive has a cross-section in the diameter direction in the form of a right-angled triangle, and is formed into an annular shape. Second portion 22b covers and seals the entire outlet of the gap between surface 51d and end surface 52c with a sufficient thickness. The first adhesive is pressed by inclined annular surface 20aa of stopper 20 during bonding to more tightly adhere to the inner circumferential surface of through hole 51a and end surface 52c, and thereby second portion 22b tightly closes the outlet of the gap between surface 51d and end surface 52c.

When receiving visible light which transmits through stopper 20, the second adhesive is cured to form second adhesive portion 23 (curing process of the second adhesive). Using a light or the like, visible light may be projected onto stopper 20. This promotes the curing of the second adhesive.

Alternatively, before or after curing of the second adhesive, ultraviolet light may be projected onto stopper 20 using an apparatus which emits ultraviolet light, such as a blacklight. As a result, the fluorescent agent in the second adhesive emits light. The state of light emission is visible through stopper 20. The adhesion state and application state of the second adhesive can be verified by visibly observing the state of light emission of the second adhesive which emits light. For example, in the case where the second adhesive does not completely cover the entire first adhesive in second portion 22b, the bonding process can be redone unless the second adhesive is cured yet.

First adhesive portion 22 and second adhesive portion 23 thus formed prevent magnetic fluid 60 in outer circumferential edge 51b of plate 51 from leaking to another place through the gap between plate 51 and magnet 52. For example, surface 51d of plate 51 and end surface 52c of magnet 52 are not completely flat, and may have distortion or warpage in some cases. This may result in an uneven interval between surface 51d and end surface 52c, generating a slight gap between first adhesive portion 22 and surface 51d or end surface 52c. In such a case, capillary action may be generated in magnetic fluid 60 by the surface tension of liquid magnetic fluid 60, and magnetic fluid 60 may invade into the gap between surface 51d and end surface 52c. The invading magnetic fluid 60 advances toward through hole 51a of plate 51 by the capillary action.

At this time, second portion 22b of first adhesive portion 22 in sealing space 55 seals the outlet from the gap between surface 51d and end surface 52c to through hole 51a. For this reason, the leakage of magnetic fluid 60 into sealing space 55 can be prevented.

Furthermore, second adhesive portion 23 covers the entire second portion 22b in sealing space 55 and in the vicinity thereof. As a result, second adhesive portion 23 closes the outlet from the gap between second portion 22b and the inner circumferential surface of through hole 51a to sealing space 55, and closes the outlet from the gap between second portion 22b and end surface 52c to sealing space 55. Accordingly, the leakage of magnetic fluid 60 through the surroundings of second portion 22b into sealing space 55 can be prevented.

Moreover, second adhesive portion 23 extends in the gap between the inner circumferential surface of through hole 51a and surface 20b of stopper 20 to prevent the leakage of magnetic fluid 60 from sealing space 55 to through holes 21 and 52a. Furthermore, second adhesive portion 23 also extends in the gap between surface 51c of plate 51 and surface 20b of stopper 20. At this time, second adhesive portion 23 bends in the corner portion formed by surface 51c and the inner circumferential surface of through hole 51a, and extends beyond the corner portion. In such a configuration, even if magnetic fluid 60 invades into the gap between the inner circumferential surface of through hole 51a and surface 20b, the leakage thereof into through holes 21 and 51a is prevented. Furthermore, second adhesive portion 23 also extends in the gap between end surface 52c and annular surface 20ab of stopper 20, thereby preventing the leakage of magnetic fluid 60 into through holes 21 and 52a.

Accordingly, a movement of magnetic fluid 60 in the position between voice coil 40 and outer circumferential edge 51b of plate 51 and a reduction thereof is prevented, and thus a reduction in the function of magnetic fluid 60 is prevented.

### [1-3. Fluorine coating process]

Details of the fluorine coating process will now be described.

FIG. 7 is a diagram illustrating the fluorine coating process performed on an assembly in the state where the vibration plate and the holding member are fixed to each other.

As illustrated in (a) of FIG. 7, in assembly 100, outer circumferential ring 11 of vibration plate 10 is adhesion bonded to the front end of holding member 30. Thus, vibration plate 10 closes the opening on the front side of the cylindrical holding member 30. In other words, assembly 100 has a cylindrical shape and has a bottom at its one end. In the state where vibration plate 10 of assembly 100 faces downward, a liquid fluorine coating agent 61 is injected into the bottomed cylindrical assembly 100. At this time, fluorine coating agent 61 is injected until the solution level of fluorine coating agent 61 reaches the height of a position near the boundary between inner circumferential surface 31 in contact with magnetic circuit 50 and inner circumferential surface 32 not contacting magnetic circuit 50. At this time, fluorine coating agent 61 is injected until a solution level becomes higher than the height of voice coil 40.

Thereby, as shown by the bold line in (b) of FIG. 7, the surfaces on the front side from the boundary between inner circumferential surface 31 and inner circumferential surface 32 and the surface of voice coil 40 are subjected to the fluorine coating process to form coating 62. Coating 62 is not formed on the surfaces from the boundary to the rear side not subjected to the fluorine coating process.

FIG. 8 is a diagram illustrating the fluorine coating process performed on an assembly in the state where the magnetic circuit and the stopper are fixed to each other.

As illustrated in (a) of FIG. 8, in the state where stopper 20 faces downward, assembly 101 is placed into a bottomed tube-shaped container 110 containing fluorine coating agent 61 therein. The solution level of fluorine coating agent 61 inside container 110 is located lower than the position of corner portion 53d formed by circular plate portion 53a and tube portion 53b of yoke 53 of magnetic circuit 50 in the state where assembly 101 is in contact with the bottom of container 110.

Here, (b) of FIG. 8 is an enlarged view of a region of first adhesive portion 22 and second adhesive portion 23. As shown by the solid white arrows in the drawing, in the case where first adhesive portion 22 and second adhesive portion 23, to which fluorine coating agent 61 permeates by capillary action, are solidified with a subtle amount of air contained therein, fluorine coating agent 61 permeates into gaps caused by the air. In this operation, coating 63 is formed also on the surfaces of the fine spaces through the fluorine coating process in the case where first adhesive portion 22 and second adhesive portion 23 have fine spaces.

As a result of the fluorine coating process, as shown by the bold lines in (c) of FIG. 8, coating 63 is formed on the surfaces of the portions on the front side with respect to end surface 52d located on the rear side of magnet 52 in assembly 101 through the fluorine coating process. Coating 63 is not formed on the surfaces of part of magnet 52 on the rear side, circular plate portion 53a and corner portion 53d of yoke 53, which are not subjected to the fluorine coating process.

Thus, coating 63 is formed on the outer surface of assembly 101 and the inner surfaces of through holes 21, 52a, and 53c in assembly 101 because assembly 101 is placed into fluorine coating agent 61 fully contained in container 110 to perform the fluorine coating process. Thereby, coating 63 can be formed on the surfaces of the adhesion bonded portions in plate 51 on which magnetic fluid 60 is disposed and the gaps between stopper 20 and magnet 52 adhesion bonded to plate 51. For this reason, the leakage of magnetic fluid 60 to the sides of through holes 21 and 51a can be prevented even if magnetic fluid 60 invades into the bonding portion between plate 51 and stopper 20 or the bonding portion between plate 51 and magnet 52.

Fluorine coating agent 61 may contain a fluorescent agent which emits light when receiving ultraviolet light. In other words, coatings 62 and 63 formed through fluorine coating process may contain a fluorescent member which emits light when receiving ultraviolet light.

FIG. 9 is a diagram illustrating a method of adhesion bonding the assembly including the coating formed thereon through the fluorine coating process.

As described above, the coating is not formed on inner circumferential surface 32 of assembly 100, because the surface is not subjected to the fluorine coating process. Similarly, the coating is not formed on the outer surface of corner portion 53d of yoke 53 in assembly 101, because the surface is not subjected to the fluorine coating process. In other words, the surface of a portion of yoke 53 held by holding member 30 has a region in which coating 63 is not formed. For this reason, inner circumferential surface 32 of assembly 100 and the outer surface of corner portion 53d of yoke 53 in assembly 101 can be effectively fixed by filling the space between inner circumferential surface 32 of assembly 100 and the outer surface of corner portion 53d of yoke 53 in assembly 101 with adhesive 33.

### [1-4. Configuration of magnetic fluid]

The physical properties of magnetic fluid 60 will now be described.

Magnetic fluid 60 is a magnetic colloid solution prepared by mixing ferromagnetic nanoparticles of iron oxide (Fe₃O₄) or the like and a dispersant covering the surfaces of the ferromagnetic nanoparticles, such as an organic acid, with a solvent comprising a synthetic hydrocarbon oil such as poly-α-olefin.

Magnetic fluid 60 has a viscosity of more than 9 mPa·s and 500 mPa·s or less at a predetermined reference temperature (e.g., ambient temperature of 15 to 35°C). The predetermined reference temperature may be 27°C, for example. Magnetic fluid 60 has a local minimum value of a viscosity of 9 mPa·s or more in the temperature range beyond the predetermined reference temperature. The viscosity of magnetic fluid 60 at the predetermined reference temperature is larger than the viscosity of magnetic fluid 60 in the temperature range beyond the predetermined reference temperature.

Magnetic fluid 60 has a magnetic saturated density of 22 mT or more. The magnetic saturated density is also referred to as saturation magnetization.

FIG. 10 is a graph showing the relation between a change in temperature of the magnetic fluids having different viscosities at the predetermined reference temperature and a change in viscosity thereof. Specifically, in the graph of FIG. 10, the solid line represents the relation between a change in temperature of a magnetic fluid and a change in viscosity, where the magnetic fluid has a viscosity of 500 mPa·s at a reference temperature of 27°C. In the graph of FIG. 10, the dashed line represents the relation between a change in temperature of a magnetic fluid and a change in viscosity, where the magnetic fluid has a viscosity of 2000 mPa·s at a reference temperature of 27°C.

As illustrated in FIG. 10, when the temperature rises from 27°C to 40°C in the magnetic fluid having a viscosity of 500 mPa·s at a reference temperature of 27°C, the viscosity reduces to 220 mPa·s, and the reduction is 280 mPa·s. In contrast, when the temperature rises from 27°C to 40°C in the magnetic fluid having a viscosity of 2000 mPa·s at a reference temperature of 27°C, the viscosity reduces to 900 mPa·s and the reduction is 1100 mPa·s. Thus, in the magnetic fluid having a viscosity of 500 mPa·s, the reduction in viscosity against an increase in temperature is significantly smaller than that in the magnetic fluid having a viscosity of 2000 mPa·s. The reduction in viscosity against an increase in temperature is smaller in a magnetic fluid having a lower viscosity at the reference temperature. For this reason, the reduction in viscosity against an increase in temperature can be effectively suppressed in a magnetic fluid having a viscosity of 500 mPa·s or less.

The solvent used in magnetic fluid 60 degrades due to oxidation at a temperature of more than 130°C. For this reason, it is preferred that magnetic fluid 60 be used in a temperature range of 130°C or less. In FIG. 10, in the magnetic fluid having a viscosity of 500 mPa·s at a reference temperature of 27°C, the viscosity monotonously reduces with an increase in temperature, and the viscosity at 130°C is 9 mPa·s. Accordingly, it is preferred that the viscosity of magnetic fluid 60 have a local minimum value of 9 mPa·s or more in the temperature range of more than the reference temperature and 130°C or less.

FIG. 11 is a graph showing the frequency properties of the output sound pressure of the loudspeakers including magnetic fluids having different viscosities at the reference temperature. Specifically, in the graph of FIG. 11, the solid line represents the frequency properties of the output sound pressure of a loudspeaker including a magnetic fluid having a viscosity of 500 mPa·s at a reference temperature of 27°C. In the graph of FIG. 11, the dashed line represents the frequency properties of the output sound pressure of a loudspeaker including a magnetic fluid having a viscosity of 2000 mPa·s at a reference temperature of 27°C.

As shown in FIG. 11, in general, the loudspeaker including a magnetic fluid having a viscosity of 500 mPa·s at a reference temperature of 27°C has larger output sound pressure across all the frequencies than the loudspeaker including a magnetic fluid having a viscosity of 2000 mPa·s at a reference temperature of 27°C. For this reason, the loudspeaker including a magnetic fluid having a smaller viscosity can improve the frequency properties of the output sound pressure.

### [1-5. Effects]

In loudspeaker 1 according to the present embodiment, the coating containing a fluorine resin is formed on the surface of outer circumferential edge 51b of plate 51 and the surface of voice coil 40. Such a configuration can reduce the surface energy between plate 51 and voice coil 40 and the magnetic fluid to more smoothly vibrate vibration plate 10. For this reason, the distortion properties of loudspeaker 1 can be improved.

In loudspeaker 1 according to the present embodiment, coating 63 is formed on the surfaces of the recessed portion formed by yoke 53, magnet 52, and plate 51. Such a configuration can reduce the surface energy of the surfaces of yoke 53, magnet 52, and plate 51 to reduce the draw of magnetic fluid 60 into the gaps between yoke 53, magnet 52, and plate 51 by capillary action.

In loudspeaker 1 according to the present embodiment, coating 62 is formed on the surface of vibration plate 10 on the side where voice coil 40 is disposed and the surface of voice coil 40. For this reason, even if voice coil 40 or vibration plate 10 approaches the surface of magnetic circuit 50 to generate capillary action on magnetic fluid 60, movement of magnetic fluid 60 from the space between plate 51 and voice coil 40 to a distant position can be reduced. For this reason, the scattering of magnetic fluid 60 can be effectively prevented.

In loudspeaker 1 according to the present embodiment, the surface of a portion of yoke 53 held by holding member 30 has a region where the coating is not formed. For this reason, yoke 53 and holding member 30 can be effectively adhesion bonded.

In loudspeaker 1 according to the present embodiment, coatings 62 and 63 further include the fluorescent member which emits light when receiving ultraviolet light. For this reason, the state of formation of coatings 62 and 63 through the fluorine coating process can be verified by projecting ultraviolet light onto the surfaces of assemblies 100 and 101 after the fluorine coating process is performed to form coatings 62 and 63. Accordingly, favorable coatings 62 and 63 can be formed.

Furthermore, places and/or regions not subjected to the fluorine coating process can be verified by projecting ultraviolet light onto the surfaces of assemblies 100 and 101 after the fluorine coating process is performed. Accordingly, it can also be verified that the coating is not formed in a portion of yoke 53 held by holding member 30, for example.

In loudspeaker 1 according to the present embodiment, second portion 22b of first adhesive portion 22 covers the outlet of the gap between the bonding surfaces of plate 51 and magnet 52. For this reason, second portion 22b prevents the leakage of magnetic fluid 60 from the outlet of the gap even if magnetic fluid 60 invades into the gap. Accordingly, a loss in magnetic fluid 60 from magnetic gap 54 is prevented in loudspeaker 1.

In loudspeaker 1 according to the present embodiment, second portion 22b of first adhesive portion 22 closes the outlet of the gap adjacent to the angular portion formed by plate 51 and magnet 52 in the gap between the bonding surfaces of plate 51 and magnet 52. Second portion 22b located in the angular portion can effectively close the outlet of the gap to seal the outlet.

In loudspeaker 1 according to the present embodiment, stopper 20 closes the outlet of the gap between the bonding surfaces of plate 51 and magnet 52 and second portion 22b of first adhesive portion 22, and is adhesion bonded to plate 51 and magnet 52. For this reason, stopper 20 can prevent the leakage of magnetic fluid 60 through the outlet of the gap and second portion 22b.

In loudspeaker 1 according to the present embodiment, because second adhesive portion 23 covers the entire second portion 22b of first adhesive portion 22, the leakage of magnetic fluid 60 through second portion 22b can be prevented.

In loudspeaker 1 according to the present embodiment, stopper 20 together with plate 51 and magnet 52 forms sealing space 55 which accommodates second portion 22b of first adhesive portion 22. At this time, second portion 22b can be formed as a lump according to the shape of sealing space 55. Accordingly, second portion 22b can cover and seal the entire outlet of the gap between the bonding surfaces of plate 51 and magnet 52 with a sufficient thickness.

In loudspeaker 1 according to the present embodiment, plate 51 has the corner portion at a distal end from the outlet of the gap in the inner circumferential surface of through hole 51a of plate 51 adjacent to the outlet of the gap between the bonding surfaces of plate 51 and magnet 52. Stopper 20 has a shape to be fitted into the corner portion, and second adhesive portion 23 extends beyond the corner portion of plate 51. Such a configuration obstructs further invasion of magnetic fluid 60 in the corner portion even if magnetic fluid 60 invades into the gap between plate 51 and stopper 20. Accordingly, such further invasion of magnetic fluid 60 can be prevented.

In loudspeaker 1 according to the present embodiment, because the second adhesive forming second adhesive portion 23 is a visible light-curable adhesive and stopper 20 has translucency, fast curing of the second adhesive can be ensured.

In loudspeaker 1 according to the present embodiment, because the second adhesive forming second adhesive portion 23 contains the fluorescent agent which emits light when receiving ultraviolet light, the state of adhesion of the second adhesive can be verified by projecting ultraviolet light onto the second adhesive after the bonding of the members. Accordingly, a favorable second adhesive portion 23 can be formed.

In loudspeaker 1 according to the present embodiment, magnetic fluid 60 has a viscosity of more than 9 mPa·s and 500 mPa·s or less at a predetermined reference temperature. The viscosity of magnetic fluid 60 has a local minimum value of 9 mPa·s or more in the temperature range of more than the predetermined reference temperature (e.g., in the temperature range of more than 27°C and 130°C or less). The viscosity of magnetic fluid 60 at the predetermined reference temperature is larger than that of magnetic fluid 60 in the temperature range above. This can suppress the reduction in viscosity even if the temperature rises. For this reason, a loudspeaker which can stably maintain the output sound pressure can be implemented.

In loudspeaker 1 according to the present embodiment, magnetic fluid 60 has a magnetic saturated density of 22 mT or more. For this reason, even if magnetic fluid 60 having a low viscosity is used, the attractive force can be maximized by the magnetic force of magnetic circuit 50, effectively causing magnetic fluid 60 to stay inside magnetic gap 54 of magnetic circuit 50. Accordingly, influences on magnetic fluid 60 by capillary action can be reduced.

### [1-6. Modifications of Embodiment 1]

Although coating 62 is formed on the surface of outer circumferential edge 51b of plate 51 and the surface of voice coil 40 on the inner circumference side in Embodiment 1, the coating may be formed on only one of the surfaces. Of at least one of the plate and the voice coil, it is sufficient that the surface of the position in contact with the magnetic fluid is fluorine coated, and any configuration other than the configuration above can be used.

Although coating 62 is formed on the surfaces the front side from the boundary between inner circumferential surface 31 and inner circumferential surface 32 and the surface of voice coil 40 in Embodiment 1, any configuration other than this can be used. It is sufficient that coating 62 is formed on at least the bonding portion between voice coil 40 and vibration plate 10 and the surface of voice coil 40 in the surfaces on the side where voice coil 40 of vibration plate 10 is disposed. In other words, it is sufficient that coating 62 is formed on the surfaces within a predetermined range from the bonding portion with voice coil 40 among the surfaces on the rear side of vibration plate 10, and the surface of voice coil 40.

Although coating 63 is formed on the surfaces on the front side with respect to end surface 52d on the rear side of magnet 52 in assembly 101 in Embodiment 1, any configuration other than this can be used. It is sufficient that coating 63 is formed on at least the surfaces of the recessed portion formed by yoke 53, magnet 52, and plate 51 (magnetic gap 54).

### [Embodiment 2]

The loudspeaker according to Embodiment 2 will now be described. The loudspeaker according to Embodiment 2 is a loudspeaker including a magnetic circuit of an external magnet type.

### [2-1. Configuration]

FIG. 12 is a perspective view illustrating an appearance of the loudspeaker according to Embodiment 2. FIG. 13 is an exploded perspective view of the loudspeaker according to Embodiment 2. FIG. 14 is a sectional view of the loudspeaker in FIG. 12 taken along line XIV-XIV. FIG. 15 is a sectional view of the loudspeaker in FIG. 12 taken along line XV-XV. FIG. 16 is a sectional view of the loudspeaker in FIG. 12 taken along line XIV-XIV after the fluorine coating process. FIG. 17 is a sectional view of the loudspeaker in FIG. 12 taken along line XV-XV after the fluorine coating process. FIGs. 14 to 17 are diagrams each illustrating the left-half configuration of the loudspeaker with respect to the central axis in the sectional view.

As illustrated in FIGs. 12 to 17, loudspeaker 1A includes vibration plate 10A, holding member 30A, voice coil 40A, plate 51A, magnet 52A, yoke 53A, and magnetic fluid 60. In other words, the magnetic circuit of an external magnet type is formed of plate 51A, magnet 52A, yoke 53A, and magnetic fluid 60. Loudspeaker 1A may further include spacer 70, substrate 80, and dust protective net 90. Spacer 70, substrate 80, and dust protective net 90 have the same configurations as those in loudspeaker 1 according to Embodiment 1, and the descriptions thereof will be omitted.

Vibration plate 10A has a shape of a thin circular plate. Similarly to vibration plate 10 according to Embodiment 1, vibration plate 10A includes vibration plate body 12A and vibration plate edge 13A. Unlike Embodiment 1, in vibration plate 10A according to Embodiment 2, vibration plate edge 13A in the diameter direction has a width identical to that of vibration plate body 12A in the diameter direction. The configuration of vibration plate 10A other than this is similar to that of vibration plate 10, and the description thereof will be omitted. As shown by the bold lines in FIGs. 16 and 17, coating 62A containing a fluorine resin is formed on the surface of vibration plate 10A on the rear side.

Similarly to holding member 30 according to Embodiment 1, holding member 30A is a cylindrical member, which holds vibration plate 10A at the end on the front side. As illustrated in FIG. 14, unlike holding member 30 according to Embodiment 1, holding member 30A has protrusion 31A projected in the projecting direction (that is, to the front side) of vibration plate edge 13A of vibration plate 10A. Protrusion 31A may be projected from outer circumferential ring 11 to the front side, for example. Protrusion 31A is a member for preventing vibration plate 10A from excessively approaching plate 51A, and has the same function as that of stopper 20 according to Embodiment 1. In other words, protrusion 31A can prevent contact of the inner surface of vibration plate 10A with magnetic fluid 60, which is caused as a result of vibration plate 10A approaching plate 51A. Protrusion 31A can prevent scattering of magnetic fluid 60 from the space between voice coil 40A and yoke 53A, which is caused by the inner surface of vibration plate 10A brought into contact with magnetic fluid 60. As shown by the bold lines in FIGs. 16 and 17, holding member 30A includes coating 62A containing a fluorine resin, coating 62A being formed on the surface of the region from the portion holding outer circumferential ring 11 and to the portion in contact with plate 51A.

Plate 51A is a metal member having a circular platy shape and having through hole 51Aa formed in its center. As shown by the bold lines in FIGs. 16 and 17, coating 63A containing a fluorine resin is formed on the surfaces of plate 51A excluding the surface facing the end surface on the S pole side of magnet 52A. Plate 51A is formed of a magnetic body.

Similarly to magnet 52 according to Embodiment 1, magnet 52A is a permanent magnet having a circular platy shape and having through hole 52Aa formed in its center. Plate 51A is fixed to one end surface 52Ac of magnet 52A in the thickness direction (front and rear direction), and yoke 53A is fixed to end surface 52Ad opposite to end surface 52Ac. Usually, in magnet 52A, end surface 52Ac is the S pole and end surface 52Ad is the N pole. Any other configuration can be used, and end surface 52Ac may be the S pole and end surface 52Ad may be the N pole. Magnet 52A is disposed coaxially with plate 51A. Magnet 52A may have an outer diameter larger than that of plate 51A. The inner diameter of through hole 52Aa of magnet 52A is larger than that of through hole 51Aa of plate 51A. Plate 51A, magnet 52A, and yoke 53A are fixed to each other with an adhesive. Plate 51A, magnet 52A, and yoke 53A do not always need to be fixed with an adhesive, and may be fixed using a fastening member such as a screw or a rivet. As shown by the bold lines in FIGs. 16 and 17, coating 63A containing a fluorine resin is formed on the surface of through hole 52Aa of magnet 52A.

Yoke 53A includes circular plate portion 53Aa having a circular platy shape and having through hole 53Ac formed in its center, and tube portion 53Ab having a cylindrical shape and erected from the inner circumferential edge of circular plate portion 53Aa on circular plate portion 53Aa. The surface of yoke 53A including tube portion 53Ab of circular plate portion 53Aa is fixed to end surface 52Ad of magnet 52A. Tube portion 53Ab of yoke 53A is disposed inside through hole 52Aa of magnet 52A, and penetrates through magnet 52A. Tube portion 53Ab is not in contact with through hole 52Aa of magnet 52A. Magnet 52A is disposed so as to cover the outer side of tube portion 53Ab of yoke 53A, and a cylindrical space is formed between tube portion 53Ab and magnet 52A. Circular plate portion 53Aa of yoke 53A is disposed coaxially with magnet 52A. Tube portion 53Ab of yoke 53A extends to penetrate through through hole 51Aa of plate 51A. In other words, tube portion 53Ab has a facing portion facing the inner lateral surface of through hole 51Aa of plate 51A. Magnetic gap 54A is formed between tube portion 53Ab and plate 51A. Yoke 53A is formed of a magnetic body.

Tube portion 53Ab of yoke 53A is projected from plate 51A to the front side. In such a configuration, tube portion 53Ab has the same function as that of stopper 20 according to Embodiment 1. In other words, tube portion 53Ab can prevent contact of the inner surface of vibration plate 10A with magnetic fluid 60, which is caused as a result of vibration plate 10A approaching plate 51A. This can prevent the scattering of magnetic fluid 60 from the space between voice coil 40A and yoke 53A, which is caused by the inner surface of vibration plate 10A brought into contact with magnetic fluid 60. As shown by the bold lines in FIGs. 16 and 17, coating 63A containing a fluorine resin is formed on the surfaces of tube portion 53Ab of yoke 53A on the front and outer sides and the surface of circular plate portion 53Aa of yoke 53A excluding the region to which the end of magnet 52A on the N pole side is fixed.

Thus, plate 51A, magnet 52A, and yoke 53A form magnetic circuit 50A of an external magnet type. Because magnetic circuit 50A is of an external magnet type, yoke 53A can be disposed in the inner circumference of magnet 52A. For this reason, magnetic circuit 50A can have a configuration smaller than that of an internal magnet type.

Similarly to voice coil 40 according to Embodiment 1, voice coil 40A is a coiled member produced by winding a metal wire material several times into loops (in a cylindrical shape). Voice coil 40A has input terminals 41A and 42A to which an electric signal is input. Voice coil 40A is fixed to vibration plate 10A. Specifically, voice coil 40A is fixed to a site on an inner side with respect to the outer circumferential edge of vibration plate 10A. Voice coil 40A is disposed inside magnetic gap 54A of magnetic circuit 50A. A coating containing a fluorine resin is formed on the surfaces of voice coil 40A on the inner circumference side and the outer circumference side.

Magnetic fluid 60 is disposed between the facing portion of tube portion 53Ab of magnetic circuit 50A and voice coil 40A. Magnetic fluid 60 is disposed across the surface of tube portion 53Ab on the outer circumference side to the surface of voice coil 40A on the inner circumference side. In other words, magnetic fluid 60 is disposed in the state where tube portion 53Ab and voice coil 40A are bridged. Magnetic fluid 60 is disposed in an annular shape across the entire outer circumference of tube portion 53Ab. In other words, magnetic fluid 60 is disposed in an annular shape across the entire inner circumference of voice coil 40A. Magnetic fluid 60 is formed of the same material as that in Embodiment 1.

### [2-2. Modifications of Embodiment 2]

Although in loudspeaker 1A according to Embodiment 2, holding member 30A is configured to have protrusion 31A for preventing vibration plate 10A from excessively approaching plate 51A, any other configuration can be used. For example, plate 51A may be configured to have a protrusion for preventing vibration plate 10A from excessively approaching plate 51A, the protrusion being projected to the front side. Alternatively, both of holding member 30A and plate 51A may have a protrusion for preventing vibration plate 10A from excessively approaching plate 51A, the protrusion being projected to the front side. In the case where plate 51A has a protrusion, the protrusion may be formed of the same material as that of plate 51A and may be a portion formed integrally with plate 51A; or the protrusion may be formed of a material different from that of plate 51A and may be a member fixed to plate 51A.

### [3. Usage Examples]

FIG. 18 is a diagram illustrating an appearance of the earphone including the loudspeaker according to an embodiment. FIG. 19 is an exploded perspective view of the earphone.

As illustrated in FIGs. 18 and 19, earphone 200 includes loudspeaker 1, port 2, ear chip 3, box 4, cable 5, and back cover 6. Earphone 200 is of a type of inner ear headphone. Loudspeaker 1A may be used instead of loudspeaker 1.

Loudspeaker 1 has the configuration described in the embodiment above.

Port 2 is an approximately cylindrical member which accommodates loudspeaker 1.

Ear chip 3 is connected to the distal end of port 2, and is a member for disposing earphone 200 in the human ear canal.

Box 4 is a member for closing the opening of port 2 opposite to the side where ear chip 3 is disposed. Port 2 and box 4 form a housing which accommodates loudspeaker 1.

Cable 5 passes through box 4 to be connected to substrate 80 of loudspeaker 1, and is a member for inputting an electric signal to loudspeaker 1.

Back cover 6 is a member which covers the portion of box 4 through which cable 5 passes.

In earphone 200 thus configured, a sound output from loudspeaker 1 according to the electric signal input through cable 5 is output from port 2 and ear chip 3. For this reason, in the case where ear chip 3 is mounted on the human ear canal, the person can hear the sound from earphone 200.

Earphone 200 is one example of an acoustic device. Although an example in which loudspeaker 1 is used in an inner ear type headphone has been described in the usage example above, loudspeaker 1 may be used in acoustic devices such as an overhead type headphone, mobile terminals, and hearing aids. Furthermore, loudspeaker 1 may be used in hearing aids.

Although the loudspeakers according to one or more aspects of this disclosure have been described with reference to the embodiments, these embodiments should not be construed as limitative to this disclosure. A variety of modifications of the present embodiments conceived and made by persons skilled in the art and embodiments including combinations of components in different embodiments may also be included within the scope of the one or more aspects of this disclosure without departing from the gist of this disclosure.

### [Industrial Applicability]

This disclosure is useful as a loudspeaker which can effectively improve properties.

### [Reference Signs List]

- 1: loudspeaker
- 2: port
- 3: ear chip
- 4: box
- 5: cable
- 6: back cover
- 10, 10A: vibration plate
- 11: outer circumferential ring
- 12, 12A: vibration plate body
- 13, 13A: vibration plate edge
- 20: stopper
- 20aa: inclined annular surface
- 20ab: annular surface
- 21: through hole
- 22: first adhesive portion
- 22a: first portion
- 22b: second portion
- 23: second adhesive portion
- 30, 30A: holding member
- 31, 32: inner circumferential surface
- 33: adhesive
- 40, 40A: voice coil
- 41, 42, 41A, 42A: input terminal
- 50: magnetic circuit
- 51, 51A: plate
- 51a, 51Aa: through hole
- 51b: outer circumferential edge
- 51c, 51d: surface
- 52, 52A: magnet
- 52a, 52Aa: through hole
- 52b: outer circumferential surface
- 52c, 52d, 52Ac, 52Ad: end surface
- 53, 53A: yoke
- 53a, 53Aa: circular plate portion
- 53b, 53Ab: tube portion
- 53c, 53Ac: through hole
- 53d: corner portion
- 54, 54A: magnetic gap
- 55: sealing space
- 60: magnetic fluid
- 61: fluorine coating agent
- 62, 63, 62A, 63A: coating
- 70: spacer
- 80: substrate
- 81: through hole
- 90: dust protective net
- 100, 101: assembly
- 110: container
- 200: earphone

## Claims

1. A loudspeaker, comprising:
a yoke;
a magnet fixed to the yoke;
a plate fixed to a surface of the magnet opposite to a surface of the magnet to which the yoke is fixed;
a voice coil disposed inside a magnetic gap formed by facing portions which are disposed in the yoke and the plate, respectively, to face each other;
a vibration plate fixed to the voice coil;
a holding member which holds the yoke and the vibration plate; and
a magnetic fluid disposed between the facing portion of the plate and the voice coil,
wherein a coating containing a fluorine resin is formed on a surface of a portion in contact with the magnetic fluid in at least one of the plate and the voice coil.

2. The loudspeaker according to claim 1,
wherein the coating is formed on a surface of a recessed portion formed by the yoke, the magnet, and the plate.

3. The loudspeaker according to claim 1 or 2,
wherein the coating is formed on at least a bonding portion between the voice coil and the vibration plate and a surface of the voice coil in surfaces on a side of the vibration plate where the voice coil is disposed.

4. The loudspeaker according to any one of claims 1 to 3,
wherein a surface of a portion of the yoke held by the holding member has a region where the coating is not formed.

5. The loudspeaker according to any one of claims 1 to 4,
wherein the coating further contains a fluorescent member which emits light when receiving ultraviolet light.

6. The loudspeaker according to any one of claims 1 to 5, further comprising:
a first adhesive portion which adhesion bonds the plate and the magnet,
wherein the first adhesive portion includes a first portion formed of a first adhesive cured inside a gap between bonding surfaces of the plate and the magnet, and a second portion formed of the first adhesive cured outside the gap, and
the second portion is disposed to cover an outlet of the gap in a direction different from a direction toward the magnetic fluid.

7. The loudspeaker according to claim 6,
wherein the yoke is located in an angular portion formed by a surface of the plate and a surface of the magnet, and
the angular portion is adjacent to the outlet of the gap.

8. The loudspeaker according to claim 6 or 7, further comprising:
a bonding member bonded to the plate and the magnet; and
a second adhesive portion which adhesion bonds the plate and the magnet to the bonding member,
wherein the bonding member is disposed to cover the outlet of the gap and the second portion.

9. The loudspeaker according to claim 8,
wherein the second adhesive portion covers an entirety of the yoke.

10. The loudspeaker according to claim 8 or 9,
wherein the bonding member together with the plate and the magnet forms a space which accommodates the yoke.

11. The loudspeaker according to claim 10,
wherein the plate has a corner portion at a distal end from the outlet of the gap in a surface adjacent to the outlet of the gap,
the bonding member has a shape fitted into the corner portion of the plate, and
the second adhesive portion extends beyond the corner portion of the plate.

12. The loudspeaker according to any one of claims 8 to 11,
wherein a second adhesive forming the second adhesive portion is a visible light-curable adhesive, and
the bonding member has translucency.

13. The loudspeaker according to any one of claims 8 to 12,
wherein the second adhesive forming the second adhesive portion contains a fluorescent agent which emits light when receiving ultraviolet light.

14. A loudspeaker, comprising:
a yoke;
a magnet fixed to the yoke;
a plate fixed to a surface of the magnet opposite to a surface of the magnet to which the yoke is fixed;
a voice coil disposed inside a magnetic gap formed by facing portions which are disposed in the yoke and the plate, respectively, to face each other;
a vibration plate fixed to the voice coil;
a holding member which holds the yoke and the vibration plate; and
a magnetic fluid disposed between the facing portion of the plate and the voice coil,
wherein the magnetic fluid has a viscosity of more than 9 mPa·s and 500 mPa·s or less at a predetermined reference temperature,
the viscosity of the magnetic fluid has a local minimum value of 9 mPa·s or more in a temperature range beyond the predetermined reference temperature, and
the viscosity of the magnetic fluid at the predetermined reference temperature is larger than the viscosity of the magnetic fluid in the temperature range.

15. The loudspeaker according to claim 14,
wherein the magnetic fluid has a magnetic saturated density of 22 mT or more.

16. A loudspeaker, comprising:
a magnet;
a first member which has a first facing portion and is magnetically bonded to a first magnetic pole of the magnet;
a second member which has a second facing portion disposed on an outer side of the first facing portion to face the first facing portion, and is magnetically bonded to a second magnetic pole opposite to the first magnetic pole of the magnet;
a voice coil disposed in a magnetic gap formed between the first facing portion and the second facing portion;
a magnetic fluid disposed at least between the voice coil and the first facing portion; and
a first adhesive portion which adhesion bonds the first member and the magnet,
wherein the first adhesive portion includes a first portion formed of a first adhesive cured inside a gap between bonding surfaces of the first member and the magnet, and a second portion formed of the first adhesive cured outside the gap, and
the second portion is disposed to cover an outlet of the gap in a direction different from a direction toward the magnetic fluid.

17. The loudspeaker according to claim 16,
wherein the second portion is located in an angular portion formed by a surface of the first member and a surface of the magnet, and
the angular portion is adjacent to the outlet of the gap.

18. The loudspeaker according to claim 16 or 17, further comprising:
a third member bonded to the first member and the magnet; and
a second adhesive portion which adhesion bonds the first member and the magnet to the third member,
wherein the third member is disposed to cover the outlet of the gap and the second portion.

19. The loudspeaker according to claim 18,
wherein the second adhesive portion covers an entirety of the second portion.

20. The loudspeaker according to claim 18 or 19,
wherein the third member together with the first member and the magnet forms a space which accommodates the second portion.

21. The loudspeaker according to any one of claims 18 to 20,
wherein the first member has a corner portion at a distal end from the outlet of the gap in a surface adjacent to the outlet of the gap,
the third member has a shape fitted into the corner portion of the first member, and
the second adhesive portion extends beyond the corner portion of the first member.

22. The loudspeaker according to any one of claims 18 to 21,
wherein a second adhesive forming the second adhesive portion is a visible light-curable adhesive, and
the third member has translucency.

23. The loudspeaker according to any one of claims 18 to 22,
wherein the second adhesive forming the second adhesive portion contains a fluorescent agent.

24. An acoustic device, comprising:
the loudspeaker according to any one of claims 1 to 23; and
a housing which accommodates the loudspeaker.

25. An earphone comprising the loudspeaker according to any one of claims 1 to 23.

26. A hearing aid comprising the loudspeaker according to any one of claims 1 to 23.

27. A portable terminal apparatus comprising the loudspeaker according to any one of claims 1 to 23.
